# EUROPÄISCHE PATENTSCHRIFT

(11) **EP 1 158 222 B1**
(45) Veröffentlichungstag und Bekanntmachung des Hinweises auf die Patenterteilung: **29.06.2005**
(21) Anmeldenummer: 01109657.5
(22) Anmeldetag: 19.04.2001
(51) Int. Cl.: F16H 63/30

(54) **Schalteinrichtung für ein Zahnräder-Wechselgetriebe**
Gearshift device for a change-speed gearbox
Dispositif de commande d'une boîte de vitesse à engrenages

(30) Priorität: 26.05.2000 DE 10026247
(43) Veröffentlichungstag der Anmeldung: 28.11.2001
(73) Patentinhaber: Bayerische Motoren Werke Aktiengesellschaft, 80809 München (DE)
(72) Erfinder: Wagner, Norbert, 81549 München (DE)

(56) Entgegenhaltungen:
- EP-A- 0 694 715
- DE-A- 19 653 170
- GB-A- 1 274 334

## Beschreibung

Die Erfindung betrifft eine Schalteinrichtung für ein Zahnräder-Wechselgetriebe eines Fahrzeuges gemäß dem Oberbegriff des Patentanspruches 1.

Eine derartige Schalteinrichtung ist aus der DE 196 53 170 A1 bekannt. Diese Schalteinrichtung weist eine zentrale Wähl- und Schaltwelle auf, die im Getriebegehäuse verdrehbar und axial verschiebbar ist, wobei durch deren Verdrehung jeweils eine in einer Schaltgasse zu betätigende Schaltkupplung anwählbar und durch deren anschließende axiale Verschiebung Gangstufen schaltbar sind, findet eine als Hebel ausgebildete Wählschwinge Verwendung. Diese ist axial- und verdrehfest mit der Schalt- und Wählwelle verbunden und gegen die Kraft zumindest eines Federelements aus ihrer Neutral- in mindestens eine Wählendstellung verschwenkbar. Dazu trägt die Wählschwinge einen Wählstift, der durch eine in Umfangsrichtung bewegliche Nabe auf der Schalt- und Wählwelle abgestützt wird.

Die Wählschwinge verursacht das Auftreten einer bestimmten Wählkraft am Schalthebel, da sie nur gegen die Widerstandskraft der Federelemente bewegbar ist und diese Umfangskraft auf die Schalt- und Wählwelle überträgt.

Außerdem legt das Federelement die Wählschwinge und damit die Schalt- und Wählwelle in einer bestimmten Neutralposition fest.

Bei einer solchen Schalteinrichtung, wie in der DE 196 53 170 A1 gezeigt, wird ein bestimmter Betrag der Wählkraft durch eine entsprechende Dimensionierung der Federelemente erreicht. Dabei ist von Nachteil, daß eine durch Verkürzung oder Verlängerung der Schenkelfeder herbeiführbare Änderung der Wählkraft bedingt, daß ebenfalls die Wählschwinge geändert werden muß.

Deshalb ist es Aufgabe der Erfindung, eine Schalteinrichtung mit Wählschwinge bereitzustellen, bei der die Wählkraft durch Verkürzung oder Verlängerung der Schenkelfeder variiert werden kann, ohne daß die Wählschwinge geändert werden muß.

Die Aufgabe wird erfindungsgemäß mit dem kennzeichnenden Merkmal des Anspruchs 1 gelöst. Weitere Ausgestaltungen der Erfindung ergeben sich aus den Unteransprüchen.

Nach der Erfindung stützt sich das Federelement an der Nabe ab.

Das hat den Vorteil, daß immer die selbe Wählschwinge verwendet werden kann, auch wenn die Schenkelfeder in radialer Richtung verkürzt oder verlängert wird. Eine gewünschte Änderung der Wählkraft bedingt jetzt nur noch, daß die Abstützstelle des entsprechenden Federelements an der Nabe geändert werden muß.

Eine bevorzugte Ausführung der Erfindung ist dadurch gekennzeichnet, daß Nabe und Federelemente gleitend oder abwälzend über Abstützelemente zusammenwirken und daß diese Abstützelemente an der Nabe angebracht sind.

Hierdurch wird beim Erzeugen der Wählkraft vorteilhafterweise das Entstehen von Spiel in der Schalteinrichtung ausgeschlossen.

Bei einer weiteren bevorzugten Ausführung der Erfindung ist der Wählstift in der Wählschwinge festgelegt und in der Nabe axial verschiebbar oder umgekehrt.

Diese Verbindung ist eine einfache Ausführung, für optimale Spielfreiheit.

Bei einer vorteilhaften Ausführung der Erfindung wird die Wählschwinge durch einen Schaltfinger gebildet. Das ergibt eine besonders einfache Ausführung der Erfindung, da der Schaltfinger bereits im Getriebe vorhanden ist, als in axialer Richtung und in Umfangsrichtung fest mit der Schalt- und Wählwelle verbundener Hebel. Wird dieser direkt mit dem Wählstift verbunden, entsteht eine besonders preiswerte Ausführung der Erfindung.

Ein bevorzugtes Ausführungsbeispiel der Erfindung ist in der nachfolgenden Beschreibung und der zugehörigen Zeichnung näher dargestellt.

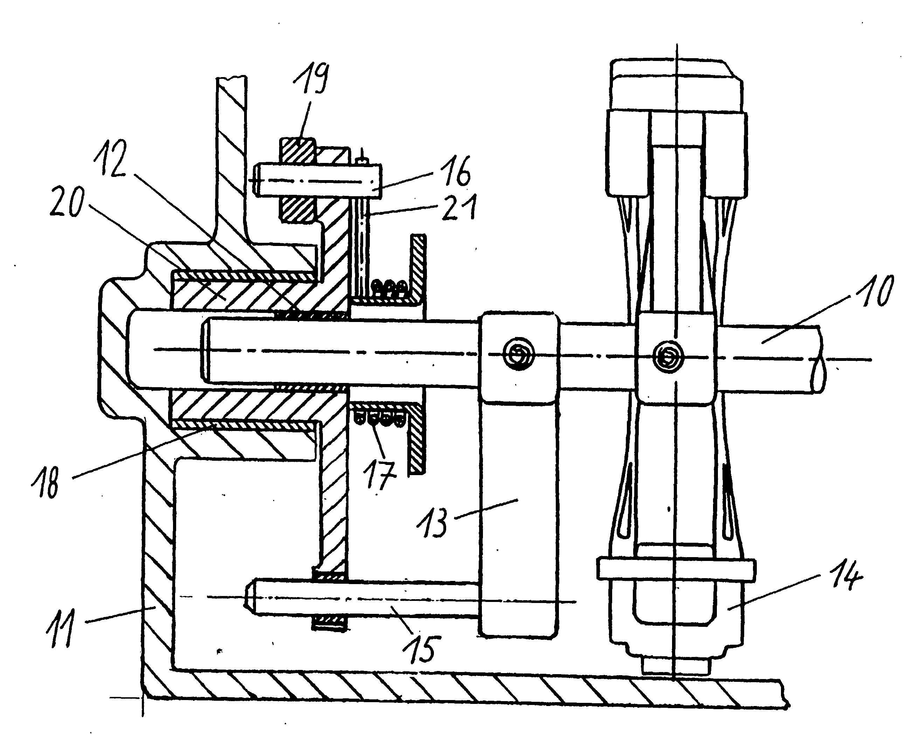

Die einzige Figur zeigt eine Schalteinrichtung gemäß der Erfindung, als Teilschnitt durch ein Getriebe, bei der ein Schaltfinger vollständig die Funktion der Wählschwinge übernimmt und bei der der Wählstift durch eine Nabe auf der Schalt- und Wählwelle abgestützt wird.

In der Figur ist eine Schalteinrichtung dargestellt, mit einer Schalt- und Wählwelle 10, die in einem Getriebegehäuse 11 über eine Lagerbüchse 12, eine Nabe 20 und eine zusätzliche Lagerbüchse 18 axial verschieblich und in Umfangsrichtung verdrehbar gleitgelagert ist. Mit der Schalt- und Wählwelle 10 ist ein Schaltfinger 13 in axialer- und in Umfangsrichtung fest verbunden. Im Schaltfinger 13, der bei einer Schaltbewegung der Schalt- und Wählwelle 10 eine Schaltschwinge 14 in axialer Richtung verschiebt, ist parallel zur Schalt- und Wählwelle 10 ein Wählstift 15 mit seinem einen Ende fest angebracht. An seinem anderen Ende wird der Wählstift 15 über die Nabe 20 abgestützt, über die sich auch die Schalt- und Wählwelle 10 im Getriebegehäuse 11 abstützt. Die Nabe 20 sitzt in Umfangsrichtung verdrehbar in dem Getriebegehäuse 11. Eine Schenkelfeder 17, die die Wählkraft erzeugt, stützt sich mit einem Ende eines Schenkels 21 an einem Abstützstift 16 ab, der fest mit der Nabe 20 verbunden ist. Diese Schenkelfeder 17 ist Teil eines Federelements, das sowohl die Wählkraft am Schalthebel erzeugt, als auch diesen in einer bestimmten Neutralposition festlegt. Ein weiteres, nicht gezeichnetes, Federelement, das am Getriebegehäuse 11 angebracht ist, wirkt auf eine verdrehbar auf dem Abstützstift 16 sitzende Rolle 19, die mit ihrer Umfangsfläche als Wirkfläche an einer zugehörigen Wirkfläche des weiteren Federelements abwälzt.

Soll nun bei einer Schalteinrichtung ein anderer Betrag der Wählkraft durch eine entsprechend andere Dimensionierung der Schenkelfeder 17 erreicht werden, ist es nicht notwendig, die Wählschwinge zu ändern. Eine Verkürzung oder Verlängerung des Schenkels 21 der Schenkelfeder 17 genügt, was dadurch bewirkt werden kann, daß der Abstützstift 16 in der Nabe 20 in radialer Richtung eine andere Position bekommt.

## Patentansprüche

1. Schalteinrichtung für ein mehrgängiges Zahnräder-Wechselgetriebe eines Kraftfahrzeuges, mit
• einer zentralen Schalt- und Wählwelle (10), die in einem Getriebegehäuse (11) verdrehbar und axial verschiebbar gelagert ist, wobei durch deren Verdrehung jeweils eine in einer Schaltgasse zu betätigende Schaltkupplung anwählbar und durch deren anschließende axiale Verschiebung Gangstufen schaltbar sind,
• mindestens einer Wählschwinge (13), die axial- und verdrehfest mit der Schalt- und Wählwelle (10) verbunden ist und die gegen die Kraft zumindest eines Federelements (17) aus ihrer Neutral- in mindestens eine Wählendstellung verschwenkbar ist, wobei
o die Wählschwinge (13) einen parallel zur Schalt- und Wählwelle (10) angeordneten Wählstift (15) trägt, der durch eine in Umfangsrichtung beweglich angeordnete Nabe (20) auf der Schalt- und Wählwelle (10) abgestützt ist, und
o das Federelement (17) ebenfalls an der Nabe (20) abgestützt ist,
**dadurch gekennzeichnet, dass**
das Federelement (17) durch einen sich von dem Wählstift (15) unterscheidenden, fest mit der Nabe (20) verbundenen Abstützstift (16) abgestützt ist.

2. Schalteinrichtung nach Anspruch 1, **dadurch gekennzeichnet, daß** Nabe (20) und Federelement (17) über Abstützelemente miteinander gleitend oder abwälzend zusammenwirken, die an der Nabe (20) angebracht sind.

3. Schalteinrichtung nach Anspruch 1 oder 2, **dadurch gekennzeichnet, daß** der Wählstift (15) in der Wählschwinge (13) festgelegt und in der Nabe (20) axial verschiebbar ist oder umgekehrt.

4. Schalteinrichtung nach einem der Ansprüche 1 bis 3, **dadurch gekennzeichnet, daß** die Wählschwinge durch einen Schaltfinger (13) gebildet wird.

## Claims

1. A shift device for a multiple change-speed gear for a motor vehicle, comprising
- a central selector shaft (10) mounted in a gearbox (11) so as to be rotatable and axially movable, wherein a clutch for actuating in a shift channel can be selected by rotating the selector shaft and gears can be selected by subsequent axial displacement of the shaft,
- at least one selector link (13) axially and co-rotatably connected to the selector shaft (10) and pivotable from its neutral position into at least one end selector position against the force of at least one spring element (17), wherein
- the selector link (13) bears a selector pin 15 parallel to the selector shaft (10) and is supported or braced on the selector shaft (10) by a hub (20) movable in the peripheral direction, and
- the spring element (17) is likewise supported or braced against the hub (20),
**characterised in that**
- the spring element (17) is braced or supported by an abutment pin (16) different from the selector pin (15) and permanently connected to the hub (20).

2. A shift device according to claim 1, **characterised in that** the hub (20) and the spring element (17) co-operate with one another by sliding or rolling via support elements mounted on the hub (20).

3. A shift device according to claim 1 or 2, **characterised in that** the selector pin (15) is fixed in the selector link (13) and axially movable in the hub (20) or vice versa.

4. A shift device according to any of claims 1 to 3, **characterised in that** the selector link is in the form of a shift finger (13).

## Revendications

1. Installation de commande d'une boîte de vitesses à plusieurs rapports à engrenages d'un véhicule automobile comprenant :
- une barre de commande centrale (10) montée à rotation et en coulissement axial dans la boîte de vitesses (11), et dont la rotation permet de sélectionner un accouplement de commutation actionné dans un chemin de commutation et de commuter les rapports de vitesse par un coulissement axial consécutif ;
- au moins un bras de sélection (13) relié solidairement en mouvement axial et en rotation à la barre de commande (10) et qui est basculé contre la force d'au moins un élément de ressort (17) de sa position neutre dans au moins une position de fin de sélection ;
• le bras de sélection (13) ayant une broche de sélection (15) parallèle à la barre de commande (10), et qui s'appuie par un moyeu (20) mobile dans la direction périphérique sur la barre de commande (10) ; et
• l'élément à ressort (17) s'appuie également contre le moyeu (20) ;
**caractérisée en ce que**
l'élément à ressort (17) est appuyé contre une broche d'appui (16) différente de la broche de sélection (15) et reliée solidairement au moyeu (20).

2. Installation de commande selon la revendication 1,
**caractérisée en ce que**
le moyeu (20) et l'élément à ressort (17) coopèrent par des éléments d'appui en coulissement et en roulement, ces éléments d'appui étant prévus sur le moyeu (20).

3. Installation de commande selon la revendication 1 ou 2,
**caractérisée en ce que**
la broche de sélection (15) est solidaire du bras de sélection (13) et coulisse axialement dans le moyeu (20) ou inversement.

4. Installation de commande selon l'une des revendications 1 à 3,
**caractérisée en ce que**
le bras de sélection est formé par un doigt de commutation (13).
